# EUROPEAN PATENT APPLICATION

(11) **EP 0 756 412 A2**
(43) Date of publication of application: **29.01.1997**
(21) Application number: 96111767.8
(22) Date of filing: 22.07.1996
(51) Int. Cl.: H04M 11/06

(54) **Device for transmitting and receiving data by means of the public telephone system**

(30) Priority: 28.07.1995 IT MI951673
(71) Applicant: ORIGINI di BARBAGLIA Dr. Giorgio & C. Sas, 28041 Arona (Novara) (IT)
(72) Inventor: Barbaglia, Giorgio, 28045 Invorio (Novara) (IT)
(74) Representative: Modiano, Guido, Dr.-Ing.

(57) **Abstract**

A device for transmitting and receiving data by means of the public telephone system comprising data entry means constituted by a touch screen (3), data display means (4) connected to the data entry means (3), and data transceiving means (9) adapted to send the data and receive them by means of the public telephone system, the received data being stored by storage means (18).

## Description

The present invention relates to an apparatus for transmitting, receiving, and storing data by means of the public telephone system, having practical and low-cost features.

Various methods for communicating information by means of the public telephone system are currently known which entail the use of various devices, such as the fax, the answering machine, the modem, etcetera.

Although these devices are particularly useful in specific fields of application, they have limitations in applications for which they were not specifically conceived.

For example, the fax is undoubtedly useful if it is necessary to convey important information but is too expensive if one wishes to send simple messages or memos, as may occur for example in offices for communicating among the various departments, with the need to store the transmitted information for subsequent viewing on the part of the recipient.

Use of the answering machine associated with a conventional telephone has the drawback that one must talk over the telephone with the correspondent and that the messages can only be listened to but not viewed.

Communication by computer through data networks is still scarcely available and is mainly intended for the transmission of data that are more important than simple personal messages or memos.

Therefore, when it is necessary to transmit personal messages or information, for example in the working or home environment or, for example, in particular applications, such as taking orders at a restaurant and the like, currently available devices are either excessively expensive or inadequate for the purpose.

A principal aim of the present invention is therefore to provide a device for transmitting and receiving data by means of the public telephone system that allows a user to easily create the intended message, send it, and at the same time to store incoming messages of the fax and voice type.

Within the scope of this aim, an object of the present invention is to provide a device for transmitting and receiving messages that can be connected to the ordinary telephone system.

Another object of the present invention is to provide a device for transmitting and receiving data that allows the user to create a message without resorting to conventional writing tools.

Another object of the present invention is to provide a device for transmitting and receiving messages that allows to store a plurality of received messages and data.

Another object of the present invention is to provide a device for transmitting and receiving messages that includes a telephone.

Another object of the present invention is to provide a device for transmitting and receiving data that allows to store the received data.

A further object of the present invention is to provide a device for transmitting and receiving messages that automatically recognizes signals arriving from similar devices when it is connected to the public telephone system.

Another object of the present invention is to provide a device for transmitting and receiving data that is highly reliable, relatively easy to manufacture, and at competitive costs.

This aim, these objects, and others which will become apparent hereinafter are achieved by a device for transmitting and receiving data by means of the public telephone system, characterized in that it comprises data entry means constituted by a touch screen, data display means connected to said data entry means, and data transceiving means adapted to send said data and receive them by means of said public telephone system, said received data being stored by storage means.

Further characteristics and advantages of the invention will become apparent from the following detailed description of a preferred but not exclusive embodiment of the device according to the invention, illustrated only by way of non-limitative example in the accompanying drawings, wherein:
figure 1 is a perspective view of the device according to the invention;
figure 2 is a block diagram of the device according to the invention;
figure 3 is a lateral elevation view of the device according to the invention;
figure 4 is a rear elevation view of the device according to the invention;
figure 5 is a plan view of the telephone handset associated with the device according to the invention;
figure 6 is a view of a first screen presented on the visual display of the device according to the invention;
figure 7 is a view of the main menu screen, displayed on the visual display of the device according to the invention;
figure 8 is a view of the screen of the telephone function, displayed on the visual display of the device according to the invention;
figure 9 is a view of the screen of the telephone call function, displayed on the visual display of the device according to the invention;
figure 10 is a view of the screen of the telephone book function displayed on the visual display of the device according to the invention;
figure 11 is a view of the screen of the fax function displayed on the visual display of the device according to the invention; and
figure 12 is a view of the screen of the answering machine function displayed on the visual display of the device according to the invention.

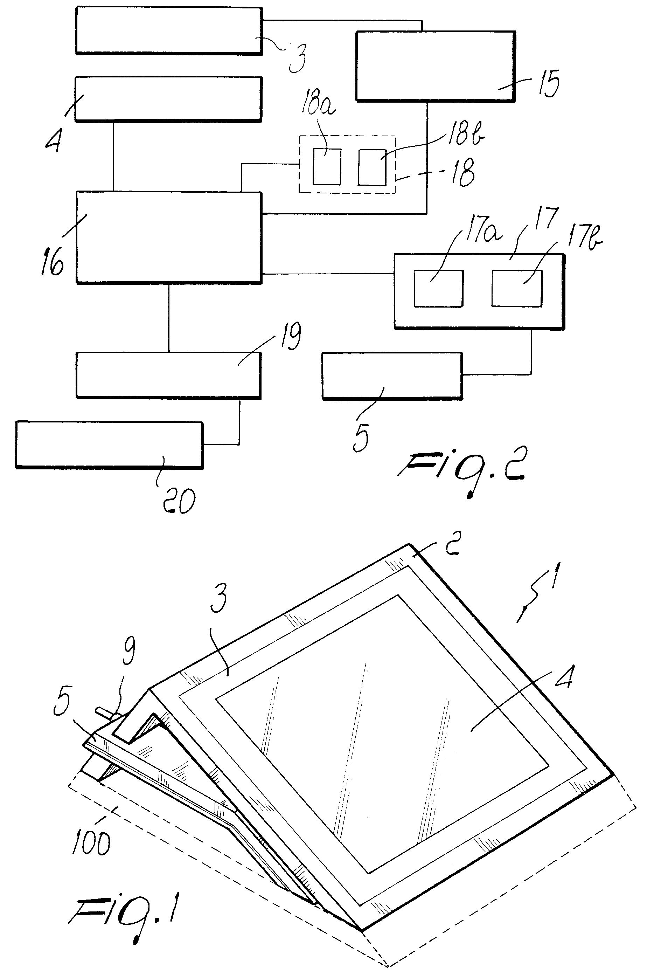

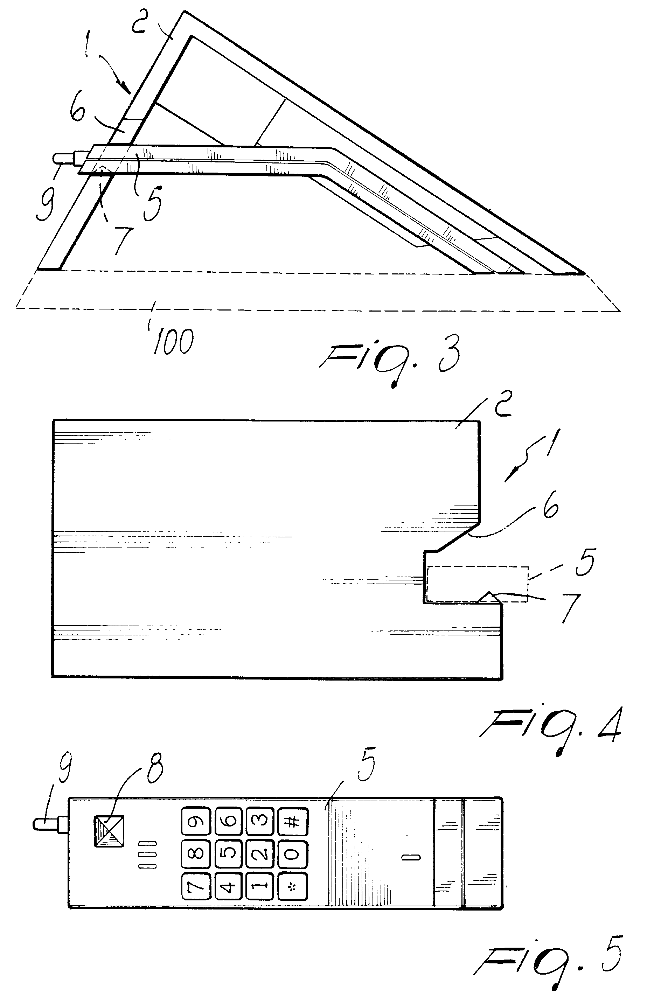

With reference to figures 1 to 5, the device according to the invention, generally designated by the reference numeral 1, comprises a compact base unit 2 which is constituted by a first and a second generally flat elements, which are connected so as to form a substantially right angle. This particular shape allows the base unit according to the invention to be placed stably on a flat surface.

Data entry means adapted to allow the interaction of a user with the device are located on the upper surface of the first element. Advantageously, said data entry means comprise a visual display of the touch-screen type 3 that is sensitive on its entire surface.

Said visual display 3 is provided by means of a transducer panel capable of converting the touch of a finger (or of any other pointed object) on a portion thereof into an electrical signal indicating the position on the screen.

Display means are arranged below the touch screen 3, are conveniently provided by means of a liquid-crystal (LCD) display 4, and are adapted to display the data to the user.

The touch screen 3 is therefore superimposed on the data display means 4.

Laterally with respect to the base unit 2 there is provided a telephone handset 5 of the so-called cordless type, which is accommodated in an appropriately provided seat 6 formed in the element that constitutes the shorter side of the substantially right-angled triangle formed by the first and second substantially flat elements described above.

The handset 5 is provided with rechargeable batteries (not shown) which are accommodated in an appropriately provided compartment.

The handset 5 communicates with the base unit through transceiver means 9 located in the handset 5 and transceiver means (not shown) located in the base unit.

Said seat 6 has a contact element 7 shaped substantially like a pyramid and adapted to engage a complementary cavity 8 formed in the handset 5 at the side where the keys for dialling telephone numbers are located.

The contact element 7 has the function of ensuring the supply of power to the handset 5, the recharging of the batteries of the handset 5, and the contacts for providing the handsfree function.

Furthermore, the contact element 7, by engaging in the corresponding cavity 8 formed in the handset 5, allows said handset to be stably located in its seat 6 when one finishes using it.

The base unit 2 has, in the front region, a connector for connection to the analog or digital telephone line, a connector for connection to a cellular telephone, a SCART connector, a connector for connection to an external power supply, and a connector for future uses (these connectors are not shown in the various figures).

The base unit 2 described above is provided with a processing system located thereinto.

Processing means 16, conveniently constituted by a microprocessor, for example of the 32-bit type, control the peripheral units, which are constituted by the liquid-crystal visual display unit 4, by the touch screen 3 (by virtue of interface means 15), and by data transceiving means 17 that advantageously comprise modulation/demodulation/faxing means 17a (modem/fax card) and local communication means 17b adapted to transmit and receive data and messages by means of the public telephone system for connection to similar local and remote terminals.

The local communication means 17b are capable of connecting one or more devices according to the invention in point-to-point or multipoint mode, ensuring electrical insulation among the devices connected to the network.

The microprocessor 16 furthermore manages memory means 18, which conveniently comprise random-access memories (RAM) 18a and a "flash EPROM" memory 18b.

The RAM memories are adapted to store the data received by the device 1, whereas the EPROM memory permanently stores, with the possibility of rewriting, the program code managed by the microprocessor 16.

In a different embodiment, the memory means 18 comprise a hard disk that allows to store a larger amount of data and to contain the applications software, as well as the database for the telephone book, the data, and the received fax messages.

Power supply means 19, advantageously constituted by a power supply connected to the mains 20, allow to supply power to the device 1.

With reference to the above figures, operation of the device according to the invention is as follows.

The user can create a message in his own handwriting, simply by pressing a finger or other pointed object on the touch screen 3; the message thus composed is displayed immediately on the liquid-crystal display so as to allow the user to check it.

The user then dials the telephone number of the user to whom he wishes to send the message, again by using the touch screen 3, and by simply pressing a given portion of said screen 3 he sends the message, by virtue of the transceiver means 17, over the telephone line (which can be analog or digital).

The telephone handset 5 allows the user to use the device according to the invention like a normal telephone.

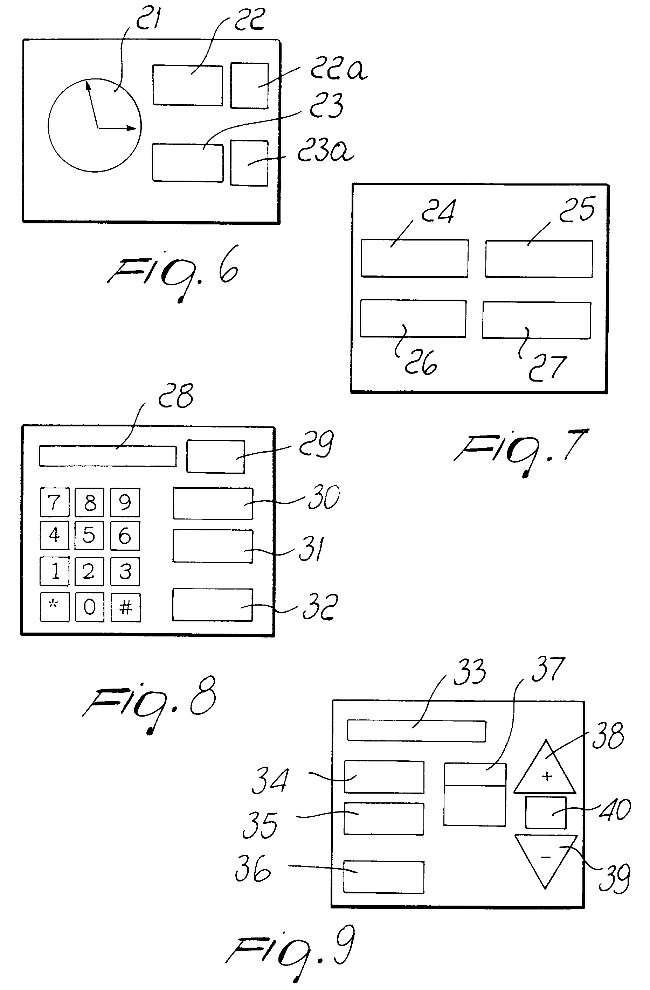

Figure 5 is a view of the screen displayed by the visual display means 4 after power-on of the device 1.

The initial screen shows a clock 21 and the status of the answering machine 23 and of the fax function 22. In particular, the status of both functions and the number of received messages (respectively 23a and 22a) are displayed.

At this level it is possible to activate or deactivate both functions by simply pressing the finger or a stylus in appropriate positions of the touch screen 3. If another area of the screen is pressed, the program stored in the memory means 8 is activated.

In any state of the program, if one does not interact with the screen for more than a preset time, the program enters a standby mode. From the standby mode, one reaches figure 7, which illustrates the main menu.

Figure 7 illustrates four different sections: the telephone 24, the fax 25, the answering machine 26, and the utilities 27.

Again by pressing a finger on the touch screen, it is possible to make a choice by pressing at the desired section.

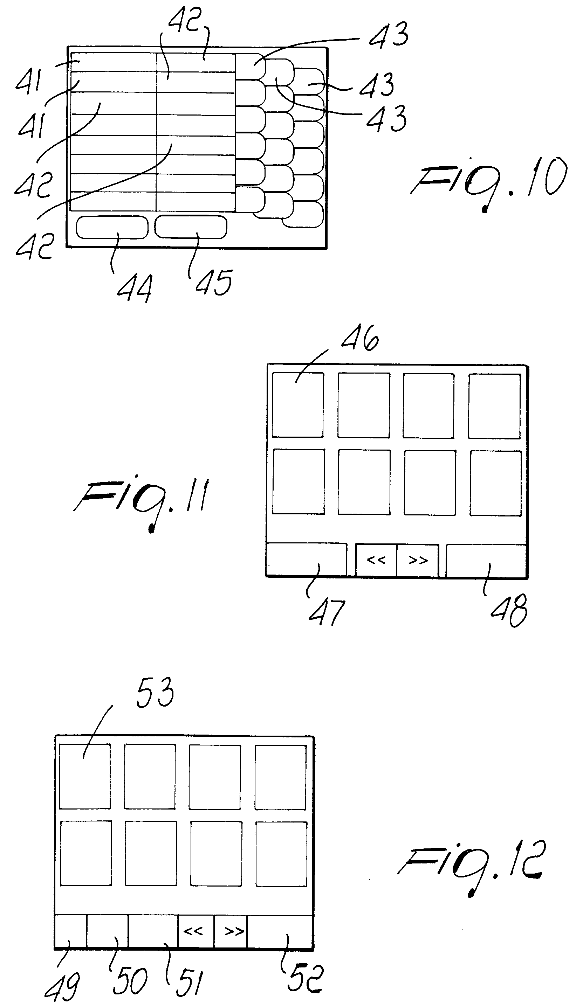

When a call is received, the program checks whether it is a fax, if the fax function is active, otherwise it reports to the user that a call is in progress and moves on to the screen shown in figure 9, where the telephone connection is defined.

Figure 9 defines the following functions: telephone "connection" 33, "handsfree" 34, "pause" 35, "closure" 36 of the connection, and call time 37. The keys 38 and 39 have the purpose of adjusting the volume of the call, which is displayed at 40.

Figure 8 is a view of the telephone function 24, which shows the keyboard for dialling, on the screen 3, the desired telephone number, which is displayed at 28.

Once the telephone number has been dialled, by pressing the call key 31 it is possible to enter the "connection" state, as shown in figure 9. At this point, the elapsed time and the status of the connection are displayed. If the line is busy, a key (not shown) is displayed which allows to place the call again.

It is possible to interrupt the call in progress at any time by means of the key 32.

By selecting the key 30 one instead accesses the telephone book shown in figure 10.

By means of this function, it is possible to select a telephone number by means of the name of the user to be called. Selection is performed by selecting the name of the desired user in the fields 41. As shown in figure 10, the fields 43 contain the respective letters of the alphabet through which it is possible to select the list of the names associated with a given first letter. If the name list is too long to be contained within the fields 41 of a single screen, it is possible to make it scroll forwards and backwards by means of the keys 44 and 45 respectively. In this case, too, selection always occurs by pressing on the touch screen 3.

The desired telephone number, corresponding to the selected name, is then displayed at 42.

The telephone book can be updated by means of the utilities function 27 of the main menu.

Figure 11 is a view of the fax function 25.

This screen allows to display the received faxes or to send a new fax.

The reference numeral 46 designates windows for displaying faxes that have been received or must be sent.

By means of a send key 47 and a close key 48 it is possible to send a new fax or, respectively, close the display of the received faxes.

The user can open a window and, by means of a stylus, write a fax on the screen 3, save the fax, transmit it, or display a received fax.

Figure 12 is a view of the answering machine function 26.

When this option is selected, a window is displayed in which every received message is shown in secondary windows 53 labelled with numbers that indicate the arrival order of the messages they contain. The time of arrival of the corresponding message and optionally the date of arrival are indicated below each secondary window 53.

In the lower portion of the screen there are keys that allow to record a greeting message (key 49), play back the greeting message (key 50), delete the received messages (key 51), display additional received messages ("<<" and ">>" keys) and close the answering machine function (key 52).

In practice it has been observed that the device according to the invention fully achieves the intended aim, since it allows a user to create messages with his own handwriting on a touch screen of the device and to send them, after dialling the telephone number on the same screen, to a similar device over the public telephone system.

Furthermore, the device allows to store messages arriving from similar devices and to view them subsequently on its screen, has the answering machine function, and the telephone book function.

The device thus conceived is susceptible of numerous modifications and variations, all of which are within the scope of the inventive concept.

The device according to the invention can be provided with internal batteries in order to make it portable; in this case, it is provided with an interface for connection to a cellular telephone in order to connect the internal modem of the device and thus expand its range of use to mobile telephony, which is expanding greatly.

A scanner/printer module 100 can be provided in association with the device according to the invention.

Finally, all the details may be replaced with other technically equivalent elements.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for transmitting and receiving data by means of the public telephone system, characterized in that it comprises data entry means constituted by a touch screen, data display means connected to said data entry means, and data transceiving means adapted to send said data and receive them by means of said public telephone system, said received data being stored by storage means.

2. A device according to claim 1, characterized in that said processing means comprise a microprocessor.

3. A device according to claim 1, characterized in that said storage means comprise random-access memories that are adapted to store received data and a memory that is adapted to permanently store and rewrite the program code for managing said device.

4. A device according to claim 1, characterized in that said storage means comprise a hard disk.

5. A device according to claim 3, characterized in that said permanent rewritable storage memory comprises a flash EPROM memory.

6. A device according to claim 1, characterized in that said display means comprise a liquid-crystal display unit.

7. A device according to claim 1, characterized in that said transceiver means comprise a modem/fax card and local communication means.

8. A device according to claim 1, characterized in that said touch screen is a screen the touch-sensitivity whereof covers its entire surface.

9. A device according to claim 1, characterized in that said data entry means are located above said display means.

10. A device according to claim 1, characterized in that it comprises power supply means comprising a power supply that can be connected to the mains.

11. A device according to claim 1, characterized in that it comprises power supply means comprising rechargeable batteries accommodated in said device.

12. A device according to claim 1, characterized in that it comprises a base unit adapted to accommodate, on its surface, said visual display means whereon said data entry means are located, said base unit being furthermore adapted to contain said processing means, said storage means, and said transceiver means.

13. A device according to claim 12, characterized in that it comprises a telephone handset that can be accommodated in a seat formed laterally in said base unit.

14. A device according to claim 13, characterized in that said telephone handset is of the cordless type and has rechargeable batteries.

15. A device according to claim 1, characterized in that it comprises a scanner/printer module.
